(19) Europäisches Patentamt
European Patent Office
Office européen des brevets

(11) EP 4 804 679 A1

(12) EUROPEAN PATENT APPLICATION
published in accordance with Art. 153(4) EPC

(43) Date of publication:
**09.09.2026 Bulletin 2026/37**

(21) Application number: **23957652.3**

(22) Date of filing: **01.11.2023**

(51) International Patent Classification (IPC):
***H04W 72/1268*** *(2023.01)* ***H04W 52/02*** *(2009.01)*

(52) Cooperative Patent Classification (CPC):
**H04W 52/02; H04W 72/1268;** Y02D 30/70

(86) International application number:
**PCT/JP2023/039487**

(87) International publication number:
**WO 2025/094324 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **1FINITY INC.**
**Kawasaki-shi, Kanagawa 211-8588 (JP)**

(72) Inventor: **UEMURA, Katsunari**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

# (54) TERMINAL DEVICE, BASE-STATION DEVICE, CONTROL METHOD FOR TERMINAL DEVICE, AND CONTROL METHOD FOR BASE-STATION DEVICE

(57) A terminal apparatus includes, a receiver that receives configuration information of a first active period indicating a transmission/reception period in units of cells and a second active period indicating a transmission/reception period for each terminal apparatus from the base station apparatus, a processor that determines a method of controlling a scheduling request on the basis of a priority of a service that triggers the scheduling request, a timing at which the scheduling request is triggered, information regarding the first active period, information indicating a predetermined period counted from the timing at which the scheduling request is triggered, and a configuration state of a resource of a physical uplink control channel for transmitting the scheduling request in a case where the scheduling request for requesting an uplink resource is transmitted, and a transmitter that transmits the scheduling request on the basis of the determination.

FIG. 4

offset2
Cell DRX active period
offset2
Next active period
T45
T46
Cell DRX cycle
Duration1
t
T40
T41
T43
T42
T44



Processed by Luminess, 75001 PARIS (FR)

## Description

### TECHNICAL FIELD

The present invention relates to a terminal apparatus, a base station apparatus, a control method for the terminal apparatus, and a control method of the base station apparatus.

### BACKGROUND ART

In the 3rd Generation Partnership Project (3GPP (registered trademark)) which is a standardization project, as New Radio (NR, also referred to as "5G") which is fifth generation mobile communication, technical specifications of communication standards that satisfy requirements of Enhanced Mobile Broadband (eMBB), Massive Machine Type Communications (MTC), and Ultra-Reliable and Low Latency Communication (URLLC) have been studied.

In 3GPP, in order to reduce power consumption on a network side (that is, a base station apparatus and core network equipment), a technique of network energy savings (NES) has been studied (Non-Patent Literature 1).

As one of techniques in the NES, Cell DTX/DRX for realizing discontinuous reception (DRX) and/or discontinuous transmission (DTX) in a cell unit has been studied. Cell DTX/DRX is a technology in which a base station apparatus configures an active period and an inactive period (or a non-active period) in units of cells, and the base station apparatus performs transmission and reception only in the active period and restricts transmission and reception in the inactive period, thereby reducing power consumption (Non-Patent Literatures 1 and 2).

### CITATION LIST

### NON-PATENT LITERATURE

Non-Patent Literature 1: 3GPP TR 38.864 V18.0.0(2022-12)
Non-Patent Literature 2: R2-2310685


### SUMMARY OF INVENTION

### PROBLEMS TO BE SOLVED BY THE INVENTION

By applying Cell DTX/DRX, the base station apparatus can obtain a power saving effect, but in a case where unexpected sudden transmission and reception of data occurs and scheduling is not completed within an active period of Cell DTX/DRX, transmission and reception of remaining data need to wait for scheduling in the next active period. This has a problem that, for example, in a case where generated data is data with high immediacy, the quality of service (QoS) requirement is not satisfied, and user experience is degraded.

In particular, Non-Patent Literature 2 discloses a method in which, when a service to be preferentially handled such as an emergency call is to be started, an uplink resource can be requested by using a random access procedure even in an inactive period of Cell DTX/DRX. However, the emergency call can occur even in the inactive period of Cell DTX/DRX, but Non-Patent Literature 2 has a problem that a method of requesting an uplink resource when the emergency call occurs in the active period of Cell DTX/DRX is unknown. In addition, it is necessary to newly define an operation after using the random access procedure on the basis of states of the terminal apparatus and the base station apparatus, but Non-Patent Literature 2 does not disclose solutions to these problems.

An object according to one aspect of the present invention is to improve power saving efficiency related to wireless communication between a terminal apparatus and a base station apparatus without affecting a high-priority service when applying a network power reduction technology.

### MEANS FOR SOLVING THE PROBLEMS

A terminal apparatus according to one aspect of the present invention includes a receiver that receives configuration information of a first active period indicating a transmission/reception period in units of cells and a second active period indicating a transmission/reception period for each terminal apparatus from the base station apparatus, a processor that determines a method of controlling a scheduling request on the basis of a priority of a service that triggers the scheduling request, a timing at which the scheduling request is triggered, information regarding the first active period, information indicating a predetermined period counted from the timing at which the scheduling request is triggered, and a

configuration state of a resource of a physical uplink control channel for transmitting the scheduling request in a case where the scheduling request for requesting an uplink resource is transmitted, and a transmitter that transmits the scheduling request on the basis of a determination of the processor.

A control method for a base station apparatus includes a transmission unit that transmits configuration information of a first active period indicating a transmission/reception period in units of cells and a second active period indicating a transmission/reception period for each terminal apparatus to the terminal apparatus, a processor that configures, in the terminal apparatus, information regarding the first active period, information indicating a predetermined period counted from the trigger timing, and a resource of a physical uplink control channel for transmitting the scheduling request in order to determine a method of controlling a scheduling request for requesting an uplink resource corresponding to a high-priority service, and a receiver that receives the scheduling request transmitted on the basis of a determination of the terminal apparatus.

## ADVANTAGEOUS EFFECTS OF THE INVENTION

According to the aspect, it is possible to improve power saving efficiency related to wireless communication between a terminal apparatus and a base station apparatus without affecting a high-priority service when applying a network power reduction technology.

## BRIEF DESCRIPTION OF DRAWINGS

FIG. 1 is a diagram illustrating an example of a configuration of a wireless communication system 1 according to an embodiment of the present invention.
FIG. 2 is a diagram illustrating an example of a functional configuration of the terminal apparatus 10 according to the embodiment.
FIG. 3 is a diagram illustrating an example of a functional configuration of the base station apparatus 20 according to the embodiment.
FIG. 4 is a diagram illustrating an example of a method of transmitting a scheduling request in a case of configuring Cell DRX.
FIG. 5 is a diagram illustrating another example of a method of transmitting a scheduling request in a case of configuring Cell DRX.
FIG. 6 is a diagram illustrating another example of a method of transmitting a scheduling request in a case of configuring Cell DRX.
FIG. 7 is a diagram illustrating an example of a procedure of configuring Cell DTX and Cell DRX.
FIG. 8 is a diagram illustrating an example of a method of controlling an active period and an inactive period of a terminal apparatus.
FIG. 9 is a diagram illustrating a conventional method of transmitting a scheduling request in a case of configuring Cell DRX.
FIG. 10 is a diagram illustrating an example of a hardware configuration of the terminal apparatus 10.
FIG. 11 is a diagram illustrating an example of a hardware configuration of the base station apparatus 20.

## DESCRIPTION OF EMBODIMENTS

Hereinafter, embodiments of the present invention will be described in detail with reference to the drawings. Problems and embodiments in the present specification are merely exemplary and do not limit the claims of the present application. In particular, the technique of the present application can be applied as long as the expressions are technically equivalent even if the expressions are different, and the claims are not limited. Then, each embodiment can be appropriately combined within a range in which there is no contradiction in processing contents. For example, an inactive period may be referred to as a non-active period.

A known technique may be appropriately used in a wireless communication system according to the embodiments of the present invention. The applicable known technique may be, for example, 5G (NR), Beyond 5G, 5G-Advanced, or other wireless communication methods. The wireless communication system according to the embodiments of the present invention targets NR, but is not limited thereto. For example, the embodiments of the present invention are also applicable to Long Term Evolution (LTE) and LTE-Advanced. In addition, the embodiments are also applicable to a wireless communication system using NR as a part of the wireless communication system.

Further, the embodiments of the present invention can be applied to any wireless communication system including at least a terminal apparatus and a base station apparatus, and can also be applied to future systems. In the

following description, LTE and LTE-Advanced are also referred to as Evolved Universal Terrestrial Radio Access (E-UTRA), but the meanings thereof are the same.

Hereinafter, embodiments of a base station apparatus, a terminal apparatus, and a wireless communication system disclosed in the present application will be described with reference to the drawings. Note that the following embodiments do not limit the disclosed technique.

<Wireless Communication System>

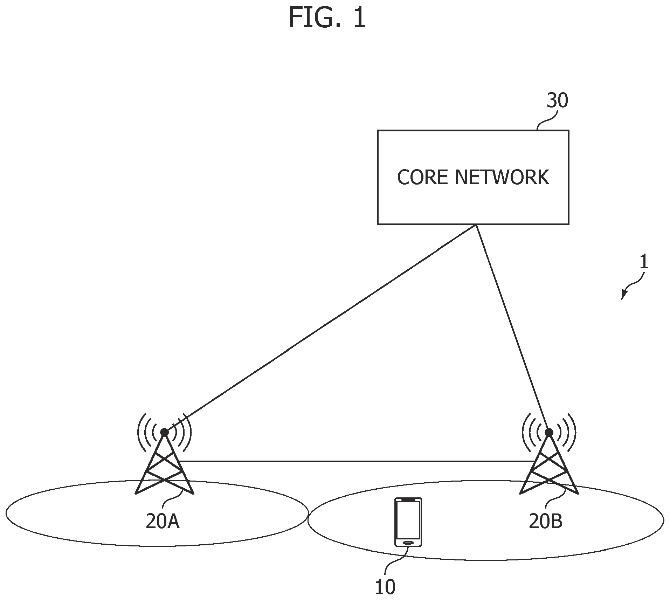

FIG. 1 is a diagram illustrating an example of a configuration of a wireless communication system 1 according to an embodiment of the present invention. The wireless communication system 1 according to the embodiment includes, for example, a terminal apparatus 10, base station apparatuses 20A and 20B, and a core network 30. Note that, in a case where the base station apparatuses 20A and 20B are not distinguished, they are simply referred to as a base station apparatus 20. Furthermore, a plurality of terminal apparatuses 10 may be provided.

The terminal apparatus 10 may be, for example, a wireless terminal such as a mobile phone, a smartphone, a personal digital assistant (PDA), a tablet, a wearable terminal, a personal computer, various apparatuses having a wireless communication function such as a vehicle, or equipment (sensor apparatuses or the like). In addition, the terminal apparatus 10 may be referred to as a wireless communication apparatus, a communication apparatus, a reception apparatus, a mobile station, user equipment (UE), a user apparatus, or the like.

A wireless communication service is provided to the terminal apparatus 10 by the base station apparatus 20 and the core network 30 in the wireless communication system 1. The core network 30 has functions such as management of service subscriber information, session management such as a voice call, and position registration management of the terminal apparatus 10, for example. In addition, the core network 30 transmits control data and/or user data to the terminal apparatus 10 via the base station apparatus 20.

The core network 30 may be a 5G core (5GC) in 5G (NR) or an evolved packet core (EPC) in 4G (E-UTRA). In addition, a connection method between the core network 30 and the base station apparatus 20 may be a non-stand alone (NSA) method or a stand alone (SA) method.

The base station apparatus 20 of 5G connected to the 5GC is a gNB, and the base station apparatus 20 of 4G connected to the EPC is an eNB. In addition, base station apparatuses of 5G are connected by an Xn interface, and base station apparatuses of 4G are connected by an X2 interface.

An area (cover area) formed by the base station apparatus 20 may be referred to as a "cell". E-UTRA and 5G are cellular communication systems constructed by a plurality of cells. As the wireless communication system according to the embodiment of the present invention, either a time division duplex (TDD) method or a frequency division duplex (FDD) method may be applied, or a different method may be applied for each cell.

The base station apparatus 20 may be configured to be divided into, for example, a centralized unit (CU), a distributed unit (DU), and a radio unit (RU). The CU is connected to the core network. In addition, the DU is connected to the terminal apparatus 10 via, for example, an RU. In this case, a communication path between the CU and the DU is implemented by, for example, a fronthaul interface (F1 interface). In addition, a plurality of DUs may be connected to one CU.

In the example illustrated in FIG. 1, data (DL data, downlink data) transmitted from the core network 30 to the terminal apparatus 10 is transmitted from the core network 30 to the base station apparatus 20, and is transmitted (transferred) from the base station apparatus 20 to the terminal apparatus 10.

Data (UL data and uplink data) transmitted from the terminal apparatus 10 to the core network 30 is transmitted from the terminal apparatus 10 to the base station apparatus 20, and is transmitted (transferred) from the base station apparatus 20 to the core network 30.

The terminal apparatus 10 and the base station apparatus 20 transmit and receive an RRC message (also referred to as RRC signaling) in a radio resource control (RRC) layer. In addition, the terminal apparatus 10 and the base station apparatus 20 transmit and receive a medium access control (MAC) control element (MAC CE) in a MAC layer.

The RRC message is transmitted as a RRC protocol data unit (PDU), and a common control channel (CCCH), a dedicated control channel (DCCH), a paging control channel (PCCH), a broadcast control channel (BCCH), or a multicast control channel (MCCH) is used as a logical channel (LCH) to be mapped.

The MAC CE is transmitted as a MAC PDU (or a MAC subPDU). The MAC subPDU is equivalent to a service data unit (SDU) in the MAC layer with, for example, an 8-bit header added, and the MAC PDU includes one or more MAC subPDUs.

Subsequently, as the physical channel and the physical signal according to the embodiment, at least synchronization signals (a primary synchronization signal and a secondary synchronization signal), a physical broadcast channel (PBCH), a physical random access channel (PRACH), a physical downlink control channel (PDCCH), a channel state information-reference signal (CSI-RS), a physical uplink control channel (PUCCH), a physical downlink shared channel (PDSCH), a physical uplink shared channel (PUSCH), a scheduling reference signal (SRS), and a demodulation reference

signal (DMRS) are present, but detailed description thereof will be omitted.

<Terminal Apparatus>

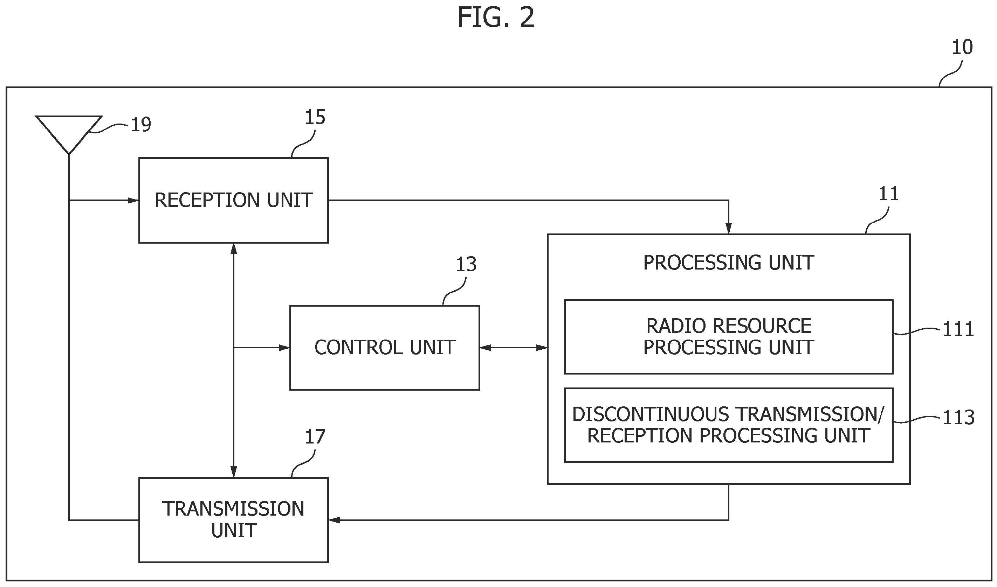

FIG. 2 is a diagram illustrating an example of a functional configuration of the terminal apparatus 10 according to the embodiment. As illustrated in FIG. 2, the terminal apparatus 10 includes, for example, a processing unit 11, a control unit 13, a reception unit 15, a transmission unit 17, and a transmission/reception antenna unit 19. The processing unit 11 includes, for example, a radio resource processing unit 111 and a discontinuous transmission/reception processing unit 113. Note that the functional configuration of the terminal apparatus 10 illustrated in FIG. 2 is merely an example, and the functional categories and the names of the functional blocks may differ as long as the operation according to the embodiment can be executed. In addition, there may be one or more blocks that realize other functions.

The processing unit 11 generates, for example, control information for controlling the reception unit 15 and the transmission unit 17, and outputs the control information to the control unit 13. The processing unit 11 executes processing regarding, for example, a radio resource control layer, a packet data convergence protocol (PDCP) layer, a radio link control (RLC) layer, and a medium access control layer.

The radio resource processing unit 111 manages various configuration information (RRC parameter, information element (IE)) of the terminal apparatus 10. For example, the radio resource processing unit 111 generates information arranged in each channel of the physical uplink, and outputs the information to the transmission unit 17. In addition, on the basis of an indication from the base station apparatus 20, the radio resource processing unit 111 performs measurement of a serving cell and a neighboring cell, start and stop of transmission/reception processing, a DL synchronization procedure (cell search), a UL synchronization procedure (random access procedure), reacquisition of system information, event evaluation regarding handover, a series of processes regarding handover, and the like.

The discontinuous transmission/reception processing unit 113 performs a series of control processes related to discontinuous reception (DRX) and discontinuous transmission (DTX). For example, on the basis of an indication from the radio resource processing unit 111 or an indication from the base station apparatus 20, the discontinuous transmission/-reception processing unit 113 manages a plurality of timers regarding discontinuous reception (DRX) and discontinuous transmission (DTX), and executes a series of transmission/reception processes of the terminal apparatus 10 in an active period or an inactive period. In particular, the discontinuous transmission/reception processing unit 113 controls a timer regarding Cell DTX/DRX related to discontinuous transmission and reception of the base station apparatus 20 and a timer regarding connected mode DRX (C-DRX) related to discontinuous transmission and reception of the terminal apparatus 10 in connection, and performs a determination process related to transmission of the terminal apparatus 10 based on a relationship between a transmission occasion of a scheduling request and an active period of Cell DTX/DRX.

The control unit 13 performs various types of control in the terminal apparatus 10. For example, the control unit 13 generates a control signal or control data for controlling the reception unit 15 and the transmission unit 17 on the basis of the control information from the processing unit 11. In addition, the control unit 13 controls uplink transmission to the base station apparatus 20, scheduling request transmission, and downlink reception from the base station apparatus 20 on the basis of determination information regarding discontinuous transmission and reception from the discontinuous transmission/reception processing unit 113.

On the basis of the control signal provided from the control unit 13, the reception unit 15 separates, demodulates, and decodes various signals received from the base station apparatus 20 via the transmission/reception antenna unit 19. The reception unit 15 outputs the decoded information to the processing unit 11.

On the basis of the control signal provided from the control unit 13, the transmission unit 17 generates, for example, a physical uplink signal, and encodes and modulates the physical uplink signal provided from the processing unit 11 or the physical uplink channel. The transmission unit 17 multiplexes various signals and transmits the multiplexed signals to the base station apparatus 20 via the transmission/reception antenna unit 19.

Note that the processing unit 11 and the control unit 13 are implemented by, for example, a processor system including a processor and a memory. In this case, the processor provides the functions of the processing unit 11 and the control unit 13 by executing a program describing the operation of the terminal apparatus 10 that will be described later. In addition, the processing unit 11 and the control unit 13 may be implemented by one processor system or may be implemented by a plurality of processor systems. Alternatively, the processing unit 11 and the control unit 13 may be implemented by a digital signal processor (DSP), a hardware circuit, or the like.

<Base Station Apparatus>

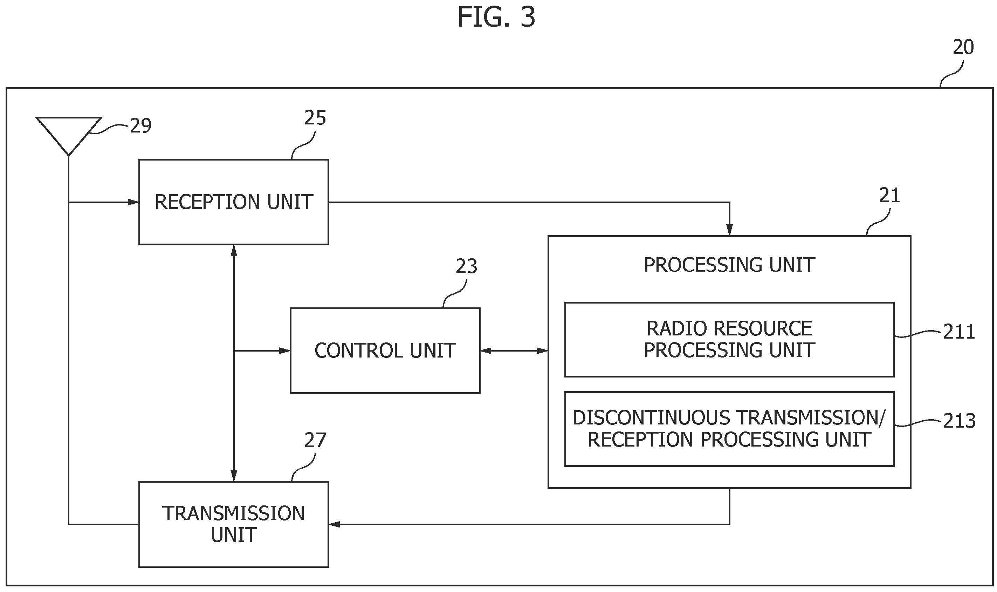

FIG. 3 is a diagram illustrating an example of a functional configuration of the base station apparatus 20 according to the embodiment. As illustrated in FIG. 3, the base station apparatus 20 includes, for example, a processing unit 21, a control unit 23, a reception unit 25, a transmission unit 27, and a transmission/reception antenna unit 29. The processing unit 21 includes, for example, a radio resource processing unit 211 and a discontinuous transmission/reception processing

unit 213. Note that the functional configuration of the base station apparatus 20 illustrated in FIG. 3 is merely an example, and the functional categories and the names of the functional blocks may differ as long as the operation according to the embodiment can be executed. In addition, there may be one or more blocks that realize other functions.

The processing unit 21 generates, for example, control information for controlling the reception unit 25 and the transmission unit 27, and outputs the control information to the control unit 23. The processing unit 21 executes processing regarding, for example, a radio resource control layer, a packet data convergence protocol layer, a radio link control layer, and a medium access control layer.

The radio resource processing unit 211 generates, for example, downlink data, an RRC message, or a MAC control element which is disposed in a physical downlink shared channel PDSCH, and outputs it to the transmission unit 27. In addition, the radio resource processing unit 211 generates a control signal or control data which is disposed in a physical downlink control channel PDCCH, and outputs it to the transmission unit 27. Furthermore, the radio resource processing unit 211 manages various types of configuration information of the terminal apparatus 10. The radio resource processing unit 211 executes start and stop of transmission/reception processing, initiation of a UL synchronization procedure (random access procedure), update of system information, adjustment of a beam transmission angle, cell configuration regarding handover, pre-configuration of a parameter regarding a measurement event type (measurement event identifier), and the like on the basis of a notification using a signal or an RRC message from the terminal apparatus 10.

The discontinuous transmission/reception processing unit 213 performs a series of control processes related to discontinuous reception (DRX) and discontinuous transmission (DTX). For example, the discontinuous transmission/reception processing unit 213 executes management of a plurality of timers related to discontinuous reception (DRX) and discontinuous transmission (DTX), a series of transmission and reception processing of the base station apparatus 20 in an active period or an inactive period, and the like on the basis of an indication from the radio resource processing unit 211 or a notification using a signal or an RRC message from the terminal apparatus 10. In particular, the discontinuous transmission/reception processing unit 213 executes generation processing of a timer regarding Cell DTX/DRX related to discontinuous transmission and reception of the base station apparatus 20, a timer regarding C-DRX related to discontinuous transmission and reception of the terminal apparatus 10 in connection, and a timer regarding retransmission control, adjustment control between the respective timers, reception processing for the terminal apparatus 10 based on a correspondence relationship between a transmission occasion of a scheduling request and an active period of Cell DTX/DRX, and determination processing regarding a response thereof.

The control unit 23 performs various controls in the base station apparatus 20. For example, the control unit 23 generates a control signal or control data for controlling the reception unit 25 and the transmission unit 27 on the basis of the control information from the processing unit 21. Furthermore, the control unit 23 controls downlink transmission to the terminal apparatus 10 and uplink reception from the terminal apparatus 10 on the basis of determination information regarding discontinuous transmission and reception from the discontinuous transmission/reception processing unit 213.

The reception unit 25 separates, demodulates, and decodes various signals received from the terminal apparatus 10 or the core network 30 via the transmission/reception antenna unit 29 on the basis of the control signal provided from the control unit 23. The reception unit 25 outputs the decoded information to the processing unit 21.

The transmission unit 27 generates, for example, a downlink reference signal on the basis of the control signal provided from the control unit 23. The transmission unit 27 performs encoding, modulation, multiplexing, and the like on various types of information provided from the processing unit 21, thereby transmitting a signal to the terminal apparatus 10 via the transmission/reception antenna unit 29.

In addition, the transmission unit 27 transmits data to the terminal apparatus 10, another base station apparatus 20, or the core network 30. The reception unit 25 receives data from the terminal apparatus 10, another base station apparatus 20, or the core network 30.

The processing unit 21 and the control unit 23 are realized by, for example, a processor system including a processor and a memory. In this case, the processor provides the functions of the processing unit 21 and the control unit 23 by executing a program describing the operation of the base station apparatus 20 that will be described later. In addition, the processing unit 21 and the control unit 23 may be implemented by one processor system or may be implemented by a plurality of processor systems. Alternatively, the processing unit 21 and the control unit 23 may be realized by a DSP, a hardware circuit, or the like.

<Scheduling Request>

The terminal apparatus 10 initiates a scheduling request (SR) procedure in order to request an uplink resource (UL-SCH: UL Shared channel) for new transmission from the base station apparatus 20. The physical channel used as the scheduling request is either a PUCCH or a PRACH. A configuration of the scheduling request (scheduling request configuration, SR configuration) is configured for each MAC entity of the terminal apparatus 10. The scheduling request configuration may include information regarding PUCCH resources for one or a plurality of SR transmissions. Further, the scheduling request configuration corresponds to one or a plurality of logical channels (LCH). That is, the terminal

apparatus 10 transmits the SR by using the scheduling request configuration corresponding to the LCH of the uplink data to be transmitted.

The information of the LCH is configured for each terminal apparatus 10 by using an LCH configuration, and the LCH configuration includes at least a priority, an LCH group to be mapped, and an identifier (ID) of a corresponding scheduling request. The MAC entity of the terminal apparatus 10 determines an appropriate SR transmission occasion on the basis of the scheduling request configuration.

The base station apparatus 20 configures one or a plurality of scheduling request configurations including at least the following information to the terminal apparatus 10 by using the RRC message. (1) An SR prohibition timer (sr-ProhibitTimer) which is timer information started after SR transmission using a PUCCH, and indicates a time at which SR transmission is prohibited (that is, it indicates a time until transmission of the next SR is permitted after SR transmission); and (2) SR maximum transmission times (sr-TransMax) which indicates a maximum number at which triggered SR transmission is permitted, and when the number of times of SR transmission for each LCH reaches the SR maximum transmission times, the terminal apparatus 10 performs release of a PUCCH resource and clearing of an uplink grant and a downlink assignment, and initiates a random access procedure.

The terminal apparatus 10 configures different SR prohibition timers and SR maximum transmission times for each SR configuration, and has an SR transmission counter for managing the SR transmission times for each SR configuration as an internal variable. Each time the terminal apparatus 10 notifies (instructs) the lower layer of SR transmission, the terminal apparatus increments a corresponding SR transmission counter, and simultaneously starts a corresponding SR prohibition timer.

The terminal apparatus 10 triggers the SR at the MAC layer (MAC entity) in the case of detecting an unsent (pending) uplink buffer at the PDCP/RLC layer. The SR is triggered in units of LCHs. When the SR is triggered, the terminal apparatus 10 considers that the SR is in the pending state until the SR is canceled. In addition, in a case where the MAC PDU including the buffer status report MAC CE (BSR MAC CE) is transmitted or in a case where an uplink resource that is the same as or larger than the total amount of all the pending uplink data is allocated, the terminal apparatus 10 cancels all the pending SRs and stops the corresponding SR prohibition timer.

In a case where DRX (C-DRX (described later)) configured for each terminal apparatus 10 is configured, the terminal apparatus 10 performs SR transmission using a PUCCH, and when an SR is in a pending state, it is considered that DRX (C-DRX) of the terminal apparatus 10 is in an active period.

Alternatively, the terminal apparatus 10 may trigger the SR in the MAC layer (MAC entity) to transmit MAC header information corresponding to the MAC CE for beam failure recovery (BFR MAC CE) to the base station apparatus 20.

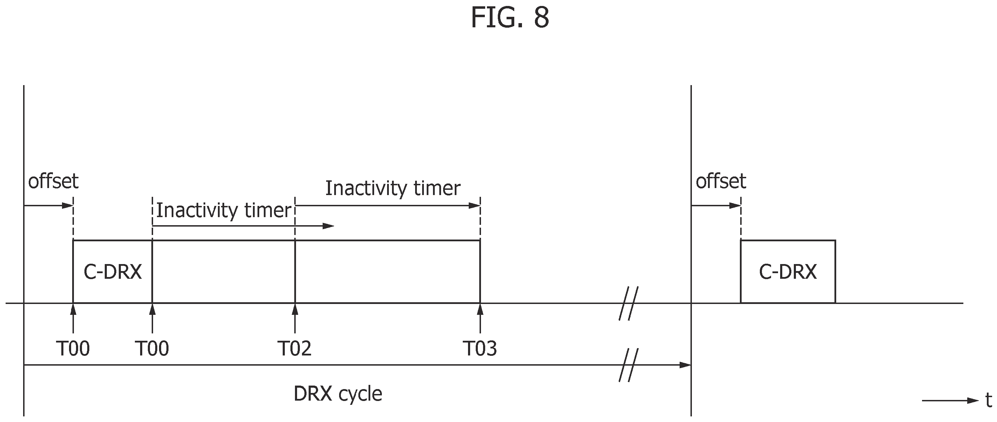

Conventional DRX (C-DRX: connected mode DRX, UE DRX) in connection will be described with reference to FIG. 8. FIG. 8 is a diagram illustrating an example of a method of controlling an active period and an inactive period of the terminal apparatus 10. The horizontal axis indicates the passage of time. The active period indicates a period (duration, time) during which the terminal apparatus 10 monitors the PDCCH. That is, the active period indicates a monitor period during which the terminal apparatus 10 attempts to decode a PDCCH scrambled (data masked) with a predetermined radio network temporary identifier (RNTI). The RNTI with which the terminal apparatus 10 attempts to perform decoding is any of the C-RNTI, the CI-RNTI, the CS-RNTI, the INT-RNTI, the SFI-RNTI, the SP-CSI-RNTI, the TPC-PUCCH-RNTI, the TPC-PUSCH-RNTI, the TPC-SRS-RNTI, the AI-RNTI, the SL-RNTI, the SLCS-RNTI, and the SL Semi-Persistent Scheduling V-RNTI.

Note that the terminal apparatus 10 acquires a synchronization signal/physical broadcast channel block SSB (SS/PBCH Block) and adjusts downlink synchronization by using the SSB when connecting (accessing) to the base station apparatus 20. The SSB includes a synchronization signal and a physical broadcast channel (PBCH). In addition, the synchronization signal includes a primary synchronization signal (PSS) and a secondary synchronization signal (SSS). The base station apparatus 20 may transmit the SSB even in the inactive period.

The cell quality (received quality) is calculated by measuring a synchronization signal block (SSB) or a channel state information reference signal (CSI-RS). The cell quality can be expressed by using any of reference signal received power (RSRP), reference signal received quality (RSRQ), received signal strength indicator (RSSI), signal to interference plus noise ratio (SINR), and path loss.

The terminal apparatus 10 adjusts uplink synchronization by using a dedicated timing advance (TA). A notification of the dedicated timing advance is provided in a dedicated manner by using a random access response from the base station apparatus 20 in the random access procedure. The uplink synchronization is considered to be valid while a timing advance timer (TA timer) is running. The random access procedure is initiated when the terminal apparatus 10 transmits a physical random access channel PRACH. The terminal apparatus 10 may consider a running period of a timer (contention resolution timer) regarding the fourth procedure (contention resolution, message 4) of the random access procedure as an active period of the C-DRX.

In addition, the terminal apparatus 10 stops the periodic or semi-persistent uplink transmission in the inactive period. Specifically, the terminal apparatus 10 stops reporting a sounding reference signal (SRS) and channel state information (CSI) in an inactive period.

In the terminal apparatus 10 of FIG. 8, at least an offset indicating a start position of an active period (C-DRX active period, C-DRX active time), a duration timer (on duration timer) indicating a length of the active period, and a DRX cycle indicating a repetition cycle of DRX are configured from the base station apparatus 20. These pieces of configuration information are configured as DRX-related parameters in the terminal apparatus 10 from the base station apparatus 20 by using the RRC message.

As illustrated in FIG. 8, the active period of C-DRX is started from a timing (time point T00) at which an offset time from a certain frame has elapsed. The terminal apparatus 10 starts running of the duration timer (drx-onDurationTimer) from time point T00, and when the duration timer is running, it is considered it as an active period. Further, when the physical downlink control channel PDCCH is received during the running of the duration timer and the PDCCH indicates a notification of new data, the terminal apparatus 10 starts the running of the inactive timer (drx-InactivityTimer (Inactivity timer in the drawing)). The terminal apparatus 10 performs transmission and reception assuming that the inactive timer is running and it is in an active period. That is, the terminal apparatus 10 considers that the active period of C-DRX is extended.

Time point T01 indicates a timing at which the terminal apparatus 10 receives the PDCCH indicating the notification of the new data. In this case, the terminal apparatus 10 starts running of an inactive timer (Inactivity timer) and also continues monitoring of the PDCCH. Time point T02 indicates that the PDCCH indicating the notification of the new data is received again before the inactive timer expires. In this case, the terminal apparatus 10 restarts the inactive timer that is running at time point T02. Time point T03 indicates a timing at which the inactive timer restarted at time point T02 expires.

The terminal apparatus 10 considers that the active period of the C-DRX has expired at time point T03 at which the inactive timer expires, and shifts to an inactive period (C-DRX inactive period, C-DRX inactive time).

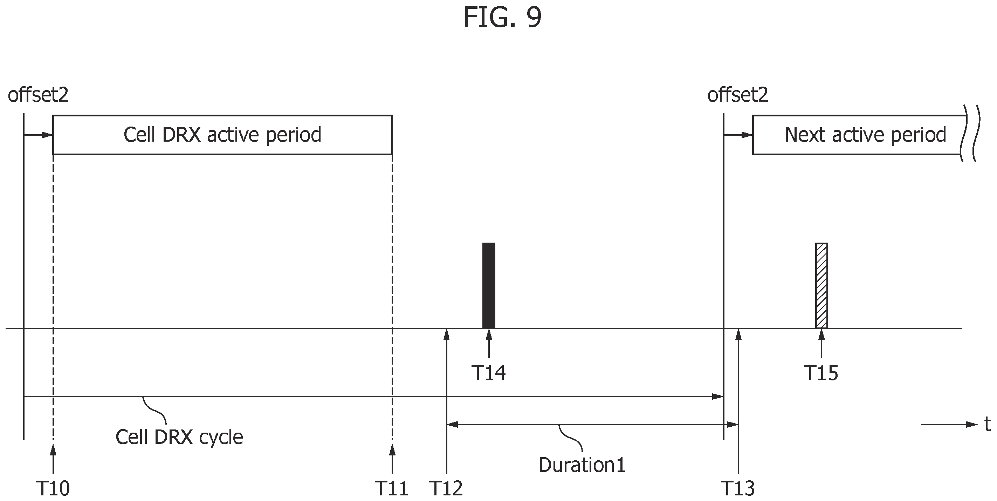

FIG. 9 is a diagram illustrating an example of a method of transmitting a scheduling request of the terminal apparatus 10 in a case where Cell DRX is configured. The horizontal axis indicates the passage of time.

As illustrated in FIG. 9, the DRX active period in units of cells (Cell DRX active period) is started from a timing (time point T10) at which an offset (offset2) time from a certain frame has elapsed. The terminal apparatus 10 and the base station apparatus 20 start running of a cell active period duration timer (cell dtx/drx-onDurationTimer) from time point T10, and when the cell active period duration timer is running, the terminal apparatus 10 and the base station apparatus 20 consider it as an active period of Cell DRX. Further, the terminal apparatus 10 and the base station apparatus 20 consider it as an inactive period of Cell DRX in a case where the cell active period duration timer expires (non-running) (time point T11).

Time point T12 indicates a timing at which the terminal apparatus 10 starts a preferentially-handled service (hereinafter referred to as a high-priority service) such as an emergency call or a public safety service or detects the service. A method of detecting a service preferentially handled by the terminal apparatus 10 may be any method. For example, the terminal apparatus 10 may detect (determine, analyze) the type of the service in response to a notification from the application layer or the NAS layer.

Subsequently, the terminal apparatus 10 determines whether the next active period is started in a predetermined period (Duration1) from time point T12. In a case where the active period of Cell DRX is not started during a period from time point T12 to time point T13 at which a predetermined period (Duration1) has elapsed, the terminal apparatus 10 exceptionally transmits a scheduling request (SR) to provide a notification of the start of a high-priority service such as an emergency call even in the inactive period of Cell DRX.

FIG. 9 illustrates an example in which a PRACH resource for transmitting a PRACH is allocated at time point T14 (that is, a PRACH transmission occasion (PRACH occasion) is configured), and a PUCCH resource for SR transmission is allocated at time point T15. Here, the PUCCH resource at time point T15 is within the active period of the Cell DRX.

In this case, since the PUCCH resource (time point T15) is allocated after time point T13, the terminal apparatus 10 determines that the time interval until the next active period is sufficiently long, and determines that the random access procedure related to the scheduling request (SR) may be initiated by using the PRACH resource (time point T14) within the inactive period of the Cell DRX without waiting for the PUCCH resource (time point T15).

The base station apparatus 20 receives the PRACH transmitted by the PRACH resource (time point T14) within the inactive period of Cell DRX and transmits a random access response (RAR) which is a response thereof. The terminal apparatus 10 transmits data regarding a priority service such as an emergency call by using an uplink resource (PUSCH resource) indicated by an uplink grant (UL grant) included in the RAR.

Hereinafter, when it is not necessary to distinguish Cell DTX and Cell DRX, they are referred to as Cell DTX/DRX.

The terminal apparatus 10 may designate, by using RRC, a search region (search space) for monitoring the PDCCH indicating activation/deactivation (application/non-application) of Cell DTX/DRX from the base station apparatus 20. The PDCCH indicating activation/deactivation of Cell DTX/DRX may be scrambled by Cell DTX/DRX RNTI (cellDTXDRX-RNTI). The base station apparatus 20 notifies the terminal apparatus 10 of the cellDTXDRX-RNTI as a part of the Cell DTX/DRX configuration. The base station apparatus 20 may designate the cellDTXDRX-RNTI and the search region thereof for each cell in order to indicate that the PDCCH indicating activation/deactivation of Cell DTX/DRX

for the terminal apparatus 10 is used in the cell.

In a case where Cell DTX/DRX is inactive (not applied) and the terminal apparatus 10 receives the PDCCH including information indicating the activation of Cell DTX or Cell DRX, the terminal apparatus activates Cell DTX or Cell DRX on the basis of the Cell DTX/DRX configuration in the designated cell. Similarly, in a case where Cell DTX/DRX is active (applied) and the terminal apparatus 10 receives a PDCCH including information indicating deactivation of Cell DTX or Cell DRX, the terminal apparatus deactivates Cell DTX or Cell DRX on the basis of the Cell DTX/DRX configuration in the designated cell.

<Conditional Handover>

The terminal apparatus 10 in a communication state moves between cells formed by the base station apparatus 20 using handover or conditional handover (CHO). In the conditional handover, the base station apparatus 20 notifies the terminal apparatus 10 in advance of cell configuration information designating a candidate cell (target cell) that is a handover destination and a trigger condition (measurement event type (measurement event, measurement report event)) of handover (conditional handover). The measurement event (trigger condition) designated in the conditional handover configuration is also referred to as an event condition (conditional event).

In this case, the base station apparatus 20 can configure a maximum of eight candidate cells (that is, a maximum of eight candidate cells are configured) for the terminal apparatus 10. The terminal apparatus 10 measures a serving cell and a neighboring cell. In addition, the terminal apparatus 10 evaluates the measurement event on the basis of the trigger condition reported from the base station apparatus 20. Hereinafter, one or a plurality of pieces of cell configuration information and the trigger condition are also collectively referred to as a conditional handover configuration. The conditional handover configuration includes candidate cells and other required cell configurations and is designated in one or more list forms. Here, the measurement target cell is a candidate cell included in the conditional handover configuration, and is identified by a physical cell identifier (PCI). In other words, the terminal apparatus 10 considers a cell having the physical cell identifier designated in the RRC message (RRCReconfiguration) included in the conditional handover configuration as a measurement target cell.

Embodiments of the present invention will be described with reference to the drawings in consideration of the above-described points. In the description of the embodiment of the present invention, in a case where a specific description of known functions and configurations related to the embodiment of the present invention makes the gist of the embodiment of the present invention unclear, the detailed description thereof will be omitted.

<First Embodiment>

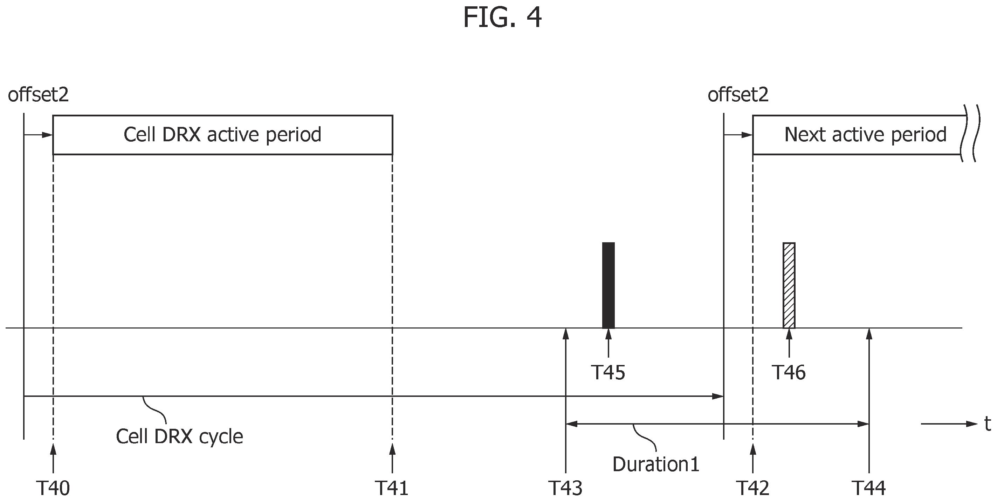

FIGS. 4 to 6 illustrate an example of a method of controlling a scheduling request in an active period and an inactive period of the terminal apparatus 10 and the base station apparatus 20 according to the first embodiment, and a horizontal axis indicates a lapse of time. The PDCCH (or RNTI) monitored by the terminal apparatus 10 in the active period may be the same as that in the related art unless otherwise mentioned. In addition, the uplink signal and the uplink channel of which the terminal apparatus 10 stops transmission in the inactive period stop at least the same signal/channel as in the related art.

In the terminal apparatus 10 of FIGS. 4 to 6, at least an offset indicating a start position of an active period (C-DRX active period) for each terminal apparatus 10 from the base station apparatus 20, a duration timer (on duration timer) indicating a length of the active period, and a DRX cycle indicating a repetition cycle are configured (not illustrated).

In addition, at least an offset (offset2) in units of subframes indicating at least a start position of a cell active period (Cell DTX active period or Cell DRX active period), a cell active period duration timer (Cell DTX on duration timer or Cell DRX on duration timer) indicating a length of an active period of Cell DTX or Cell DRX, and a Cell DTX cycle or Cell DRX cycle (Cell DTX cycle or Cell DRX cycle) indicating a repetition cycle are configured as parameters indicating DTX in units of cells (Cell DTX, a period in which transmission to the terminal apparatus 10 is possible) or DRX in units of cells (Cell DRX, a period in which transmission from the terminal apparatus 10 can be received). Furthermore, an offset (slotOffset) in units of slots may be further configured with respect to the offset (offset2) indicating the start position of the cell active period (not illustrated). These pieces of configuration information are configured as Cell DTX/DRX-related parameters (CellDTXDRX-Config) in the terminal apparatus 10 from the base station apparatus 20 by using an RRC message.

Here, the active period of DRX in units of cells is an example of a first active period, and the active period of C-DRX is an example of a second active period.

Furthermore, timer information indicating a predetermined period used for determination of SR transmission may be individually configured for the terminal apparatus 10 from the base station apparatus 20 by using an RRC message, may be configured for each cell by using system information (SIB), or may be defined in advance as a fixed value (for example, 256 frames or 3 seconds). The predetermined period may be a value calculated from the active period or the inactive period of Cell DTX/DRX. The base station apparatus 20 may configure a value such as double the period, the

same period, half the period, or one-third the period, and the terminal apparatus 10 may calculate the value from existing parameters serving as a base. The existing parameters are, for example, an active period or an inactive period of Cell DTX, an active period or an inactive period of Cell DRX, an SR transmission cycle, an SR prohibition timer, a random access response window (or a message B response window), and a contention resolution timer. The base station apparatus 20 may individually configure which existing parameter is used as a base for the terminal apparatus 10. The RRC message is, for example, an RRCReconfiguration message.

FIG. 4 is a diagram illustrating an example of a method of transmitting a scheduling request related to a high-priority service in the terminal apparatus 10 in a case where Cell DRX is configured.

Similarly to FIG. 9, a DRX active period in units of cells (Cell DRX active period) is started from a timing (time point T40) at which an offset (offset2) time from a certain frame has elapsed. The terminal apparatus 10 and the base station apparatus 20 start running of a cell active period duration timer (cell dtx/drx-onDurationTimer) from time point T40, and when the cell active period duration timer is running, the terminal apparatus 10 and the base station apparatus 20 consider is as an active period of Cell DRX. Further, the terminal apparatus 10 and the base station apparatus 20 consider it as an inactive period of Cell DRX in a case where the cell active period duration timer expires (non-running) (time point T41). Time point T42 indicates a start timing of the DRX active period in units of cells in the next cycle (Cell DRX cycle).

Time point T43 indicates a timing at which the terminal apparatus 10 starts the high-priority service or detects the service. That is, this indicates that at least one SR is pending at time point T43. The terminal apparatus 10 determines whether the next Cell DRX active period is started during a predetermined period (Duration1) from time point T43. Note that the high-priority service is, for example, a service that requires a predetermined or higher QoS or a service in which a high-priority PDU session (emergency PDU session for emergency call, or mission critical service session for public safety) is established. That is, the terminal apparatus 10 determines whether or not the next Cell DRX active period (time point T42) is started during a period from time point T43 to time point T44 at which the predetermined period (Duration1) has elapsed. The predetermined period (Duration1) may be rephrased as a time interval, a time distance, or the like.

A high-priority service is mapped to a high-priority LCH. In the mapping method, for example, an LCH having the highest priority may be selected from the priorities of the LCHs configured in the terminal apparatus 10, an LCH having the highest priority within a predetermined period may be selected, one of the LCHs having a certain priority or higher may be selected, or an LCH other than an LCH having the low priority may be selected. The base station apparatus 20 may configure information indicating a certain or higher priority in the terminal apparatus 10.

As illustrated in FIG. 4, it is assumed that the base station apparatus 20 allocates a PRACH resource for transmitting a PRACH to the terminal apparatus 10 at time point T45, and allocates a PUCCH resource (D-SR) for SR transmission at time point T46. Here, the PRACH resource at time point T45 is within the inactive period of Cell DRX, and the PUCCH resource at time point T46 is within the active period of Cell DRX.

In a case where the next active period of Cell DRX is started within the predetermined period (that is, a period from time point T43 to time point T44), the terminal apparatus 10 further performs the following determination.

In a case where one or more PUCCH resources used for SR transmission are allocated before time point T44, and in a case where the priorities of the LCHs corresponding to the respective PUCCH resources are all low priorities (in other words, in a case where all the priorities of the LCHs corresponding to the respective PUCCH resources do not correspond to the high-priority service), the terminal apparatus 10 performs SR using the PRACH resource instead of SR using the PUCCH resource. In other words, the terminal apparatus 10 determines that the random access procedure related to the scheduling request (SR) may be initiated by selecting the PRACH resource (time point T45) within the inactive period of Cell DRX and without waiting for the PUCCH resource (time point T46). The terminal apparatus 10 initiates a random access procedure and cancels all pending SRs. The terminal apparatus 10 initiates the random access procedure in the primary cell in the primary cell group or in the primary secondary cell in the secondary cell group. Note that the terminal apparatus 10 can determine whether or not the SR corresponds to the high-priority service, for example, by determining whether or not the priority of the LCH corresponding to the PUCCH resource used for SR transmission is equal to or higher than the priority of the high-priority service.

On the other hand, in a case where one or a plurality of PUCCH resources used for SR transmission are allocated before time point T44, and at least one of the priorities of the LCH corresponding to the respective PUCCH resources has a high priority, the terminal apparatus 10 performs SR transmission using the PUCCH resource. In other words, the terminal apparatus 10 determines that the scheduling request (SR) may be transmitted by selecting the PUCCH resource (time point T46) within the active period of the Cell DRX without performing the random access procedure using the PRACH resource (time point T45).

In short, the terminal apparatus 10 determines whether to transmit the PRACH at time point T45 according to, for example, the first priority of the data (or the LCH corresponding to the data) generated at time point T43 and the second priority of the LCH corresponding to the PUCCH resource used for SR transmission at time point T46. Therefore, for example, the terminal apparatus 10 performs control such that the SR is transmitted at time point T46 in a case where the first priority is equal to or lower than the second priority, and the PRACH is transmitted at time point T45 in a case where the first priority is higher than the second priority. In a case where there are a plurality of PUCCH resources until time point T44,

the terminal apparatus 10 may configure, for example, the highest priority among the priorities of the LCHs corresponding to the plurality of PUCCH resources as the second priority.

In a case where the next active period of Cell DRX is not started within the predetermined period, the terminal apparatus 10 is allowed to request an uplink resource on the basis of the random access procedure in order to initiate the high-priority service even in the inactive period of Cell DRX.

As a method of determining whether the priority of the LCH is the high priority or the low priority, the information regarding the priority may be explicitly configured in the RRC message as a part of the LCH configuration or the SR configuration for the terminal apparatus 10 by the base station apparatus 20, a threshold for determining the priority may be configured, or the determination may be performed on the basis of the implementation of the terminal apparatus 10.

The terminal apparatus 10 may initiate the random access procedure by using a dedicated random access resource if preconfigured for the random access procedure triggered on the basis of the high-priority service. The dedicated random access resource indicates a frequency-time resource of a random access preamble and a PRACH.

The control method in FIG. 4 can also be rephrased as follows using Expression 1.

$$[(\text{SFN} \times 10) + (\text{subframe number}) + \text{Duration1}] \text{ modulo } (\text{Cell DRX cycle}) < [(\text{Offset2}) + (\text{SR offset})] \text{ module } (\text{Cell DRX cycle}) \quad \text{[Expression 1]}$$

A system frame number (SFN) and a subframe number respectively indicate a system frame number and a subframe number of a serving cell at the time of calculating Expression 1. SR offset indicates a cycle of a PUCCH resource for SR and an offset from a head of a subframe. Duration1, Cell DRX cycle, Offset2, and SR offset are designated in units of subframes.

Note that a control method in which an SR offset is not taken into consideration may be used, and in that case, Expression 2 may be used.

$$[(\text{SFN} \times 10) + (\text{subframe number}) + \text{Duration1}] \text{ modulo } (\text{Cell DRX cycle}) < (\text{Offset2}) \quad \text{[Expression 2]}$$

When at least one SR is pending, the terminal apparatus 10 performs the following determination for each pending SR. In a case where the pending SR is triggered corresponding to the high-priority service, and when the Cell DRX configuration is activated and it is in a Cell DRX inactive period, the terminal apparatus 10 initiates the random access procedure in a case where Expression 1 (or Expression 2) is satisfied.

In a case where Expression 1 (or Expression 2) is not satisfied, the terminal apparatus 10 maintains the pending SR until the Cell DRX active period, does not notify (instruct) that there is a pending SR in the lower layer in the Cell DRX inactive period, does not start the SR prohibit timer, and further determines not to increment the SR transmission counter. The terminal apparatus 10 performs SR transmission using the corresponding PUCCH resource for each SR pending in the next Cell DRX active period.

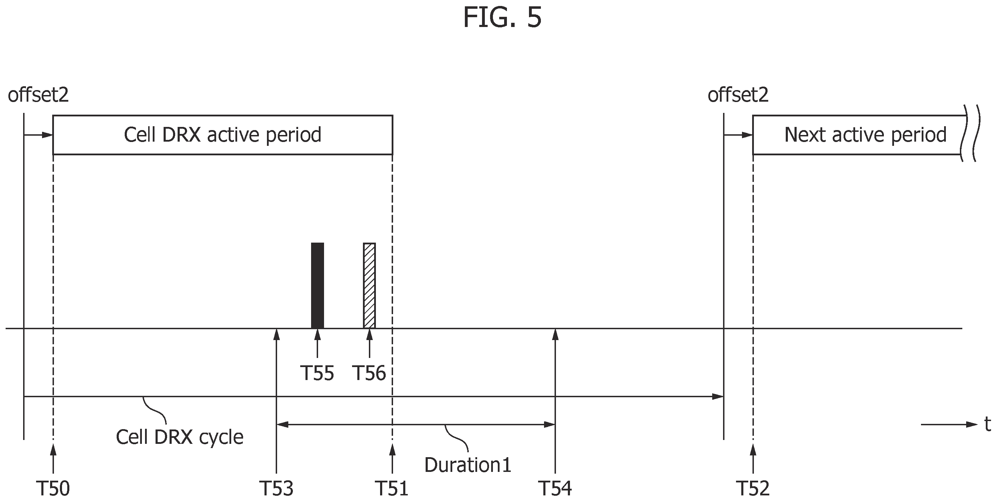

FIG. 5 is a diagram illustrating another example of a method of transmitting a scheduling request related to a high-priority service in the terminal apparatus 10 in a case where Cell DRX is configured.

Similarly to FIG. 4, the DRX active period in units of cells (Cell DRX active period) is started from a timing (time point T50) at which an offset (offset2) time from a certain frame has elapsed. The terminal apparatus 10 and the base station apparatus 20 start running of the cell active period duration timer (cell dtx/drx-onDurationTimer) from time point T50, and the terminal apparatus 10 and the base station apparatus 20 consider it as an active period of Cell DRX in a case where the cell active period duration timer is running. Further, the terminal apparatus 10 and the base station apparatus 20 consider it as an inactive period of Cell DRX in a case where the cell active period duration timer expires (non-running) (time point T51). Time point T52 indicates the start timing of the DRX active period in units of cells in the next cycle (Cell DRX cycle).

Time point T53 indicates a timing at which the terminal apparatus 10 initiates the high-priority service or detects the service. That is, this indicates that at least one SR is pending at time point T53. The terminal apparatus 10 determines whether the next Cell DRX active period is started during a predetermined period (Duration1) from time point T53. That is, the terminal apparatus 10 determines whether or not the next Cell DRX active period (time point T52) is started during a period from time point T53 to time point T54 at which the predetermined period (Duration1) has elapsed. The predetermined period (Duration1) may be rephrased as a time interval, a time distance, or the like.

As illustrated in FIG. 5, it is assumed that the base station apparatus 20 allocates a PRACH resource for transmitting a PRACH to the terminal apparatus 10 at time point T55 and allocates a PUCCH resource for SR transmission at time point T56. Here, the PRACH resource at time point T55 and the PUCCH resource at time point T56 are assumed to be within the active period of Cell DRX.

When at least one SR is pending, the terminal apparatus 10 performs the following determination for each pending SR. In a case where the pending SR is triggered corresponding to the high-priority service, and when the Cell DRX

configuration is activated and it is in the active period of Cell DRX, the terminal apparatus 10 further performs the following determination.

In a case where one or more PUCCH resources used for SR transmission are allocated within the current Cell DRX active period (between time point T53 and time point T51), and in a case where the priorities of the LCHs corresponding to the respective PUCCH resources are all low priorities, the terminal apparatus 10 performs SR using the PRACH resource instead of SR using the PUCCH resource. In other words, when there is the PRACH resource (time point T55) allocated earlier than the PUCCH resource (time point T56), the terminal apparatus 10 determines that the scheduling request (SR) may be transmitted by selecting the PRACH resource. The terminal apparatus 10 initiates a random access procedure and cancels all pending SRs.

On the other hand, in a case where one or a plurality of PUCCH resources used for SR transmission are allocated within the current Cell DRX active period, and at least one of the priorities of the LCHs corresponding to the respective PUCCH resources is a high priority, the terminal apparatus 10 performs SR transmission using the PUCCH resource. In other words, the terminal apparatus 10 determines that the scheduling request (SR) may be transmitted by selecting the PUCCH resource (time point T56) within the active period of the Cell DRX without performing the random access procedure using the PRACH resource (time point T55) allocated earlier than the PUCCH resource (time point T56).

Alternatively, in a case where one or more PUCCH resources used for SR transmission within the current Cell DRX active period are unavailable (invalid), the terminal apparatus 10 performs SR transmission using the PRACH resource. The terminal apparatus 10 initiates a random access procedure and cancels all pending SRs.

The case in which the PUCCH resource is unavailable indicates a state in which at least one of (1) the SR configuration using the PUCCH resource is not reported, (2) the SR transmission occasion using the PUCCH resource does not exist in the Cell DRX active period, (3) the PUCCH resource is unavailable by the SR prohibition timer, (4) the uplink synchronization is lost (the timing advance timer does not run), and (5) the number of times of corresponding SR transmission reaches the maximum number of times of transmission is satisfied. In other words, in a case where none of the above (1) to (5) is satisfied, the terminal apparatus 10 considers that a valid PUCCH resource is configured.

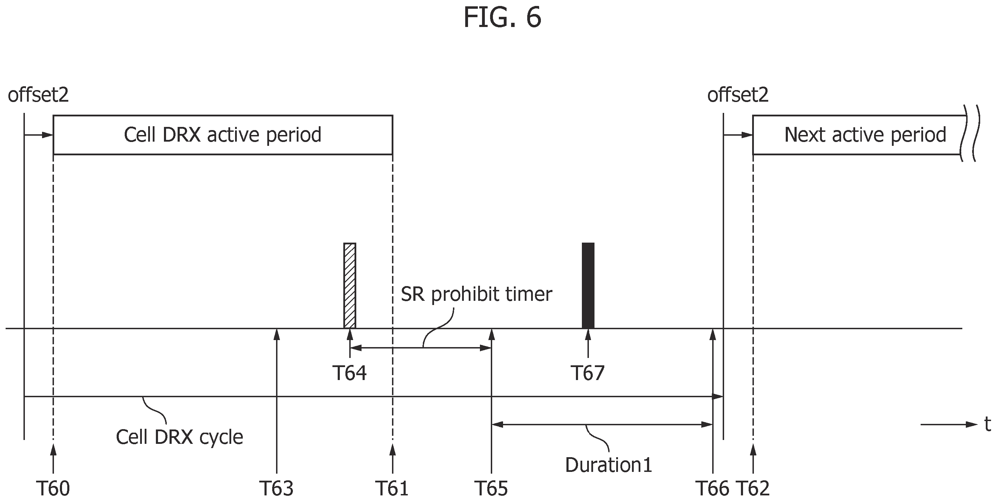

FIG. 6 is a diagram illustrating an example of a method of transmitting a scheduling request related to a high-priority service in consideration of an SR transmission prohibition timer in the terminal apparatus 10 in a case where Cell DRX is configured.

Similarly to FIG. 4, a DRX active period in units of cells (Cell DRX active period) is started from a timing (time point T60) at which an offset (offset2) time from a certain frame has elapsed. The terminal apparatus 10 and the base station apparatus 20 start running of a cell active period duration timer (cell dtx/drx-onDurationTimer) from time point T60, and the terminal apparatus 10 and the base station apparatus 20 consider it as an active period of Cell DRX in a case where the cell active period duration timer is running. Further, the terminal apparatus 10 and the base station apparatus 20 consider it as an inactive period of Cell DRX in a case where the cell active period duration timer expires (non-running) (time point T61). Time point T62 indicates the start timing of the DRX active period in units of cells in the next cycle (Cell DRX cycle).

Time point T63 indicates a timing at which the terminal apparatus 10 initiates the high-priority service or detects the service. As illustrated in FIG. 6, it is assumed that the base station apparatus 20 allocates a PUCCH resource for SR transmission to the terminal apparatus 10 at time point T64, and allocates a PRACH resource for transmitting a PRACH at time point T67. Here, it is assumed that the PUCCH resource at time point T64 is within the active period of Cell DRX and the PRACH resource at time point T67 is within the inactive period of Cell DRX. It is expected that the PUCCH resource for SR transmission is a high-priority LCH at time point T64, but may be a low-priority LCH.

In a case where it is determined that the PUCCH resource for SR transmission is available, the terminal apparatus 10 transmits an SR to the base station apparatus 20 by using the PUCCH resource, and further starts running of the SR prohibition timer (time point T64).

As illustrated in FIG. 6, in a case where the timing at which the SR prohibition timer expires (time point T65) is within the inactive period of the Cell DRX, the terminal apparatus 10 determines whether the next Cell DRX active period is started in a predetermined period (Duration1) from time point T65. That is, the terminal apparatus 10 determines whether or not the next Cell DRX active period (time point T62) is started during a period from time point T65 to time point T66 at which the predetermined period (Duration1) has elapsed.

In a case where the next active period of Cell DRX is not started within the predetermined period, the terminal apparatus 10 is allowed to request an uplink resource on the basis of the random access procedure in order to initiate the high-priority service even in the inactive period of Cell DRX. For example, the terminal apparatus 10 can use the PRACH resource (time point T67) in the Cell DRX inactive period.

When the next Cell DRX active period is started within the predetermined period, a method of selecting the PUCCH resource for SR transmission in consideration of the priority of the LCH may be the same as that in FIG. 4.

The control method in FIG. 6 can also be rephrased as follows by using Expression 1 (or Expression 2).

When at least one SR is pending, the terminal apparatus 10 performs the following determination for each pending SR. In a case where the pending SR is triggered corresponding to the high-priority service, and when (a) the Cell DRX configuration is activated and it is in the Cell DRX active period, and (b) there is an available PUCCH resource for SR

transmission, and the SR prohibition timer does not run at the SR transmission timing, the terminal apparatus 10 notifies (instructs) the lower layer of the transmission of the SR by using the PUCCH resource corresponding to the pending SR, and starts running of the corresponding SR prohibition timer.

On the other hand, in the Cell DRX inactive period, the terminal apparatus 10 determines to initiate the random access procedure in a case where Expression 1 (or Expression 2) is satisfied, and determines, in a case where Expression 1 (or Expression 2) is not satisfied, to maintain the pending SR until it is in the Cell DRX active period, not to notify (instruct) that there is the pending SR in the lower layer in the Cell DRX inactive period, and not to start the SR prohibition timer, and further determines not to increment the SR transmission counter. The terminal apparatus 10 performs SR transmission using the corresponding PUCCH resource for each SR pending in the next Cell DRX active period.

In the above description, in a case where the random access procedure is initiated to request the uplink resource for the high-priority service, the terminal apparatus 10 may consider the clocking period of the random access response window (or the message B response window) after the transmission of the PRACH (random access preamble) as the active period of the C-DRX, and may start monitoring the PDCCH (cellDTXDRX-RNTI, Cell DTX/DRX-RNTI) indicating activation/deactivation of the Cell DTX/DRX in addition to monitoring at least the RA-RNTI (random access radio network temporary identifier: Random Access-RNTI) and the C-RNTI (cell radio network temporary identifier: Cell-RNTI) during the clocking of the random access response window.

In addition, in a case where the random access procedure is initiated to request the uplink resource for the high-priority service, the terminal apparatus 10 may consider a running period of a timer (contention resolution timer) related to contention resolution after transmitting a PUSCH (that is, the RACH message 3) on the uplink resource indicated by the uplink grant included in the RAR as an active period of the C-DRX or an active period of the Cell DTX, and may start monitoring a PDCCH (cellDTXDRX-RNTI) indicating activation/deactivation of the Cell DTX/DRX in addition to monitoring at least the C-RNTI during running of the contention resolution timer.

In addition, in a case where the random access succeeds, that is, in a case where the decoding of the PDCCH scrambled with the C-RNTI succeeds during the running of the contention resolution timer and the received PDCCH indicates new transmission, the terminal apparatus 10 may consider the period after the reception of the PDCCH as the active period of the C-DRX or the active period of the Cell DTX (or Cell DRX).

The terminal apparatus 10 may determine whether or not the next Cell DRX active period is started within the predetermined period again after the random access procedure is completed by using the information of the predetermined period, or may perform the determination again when the random access procedure is not successful and the retry is performed (that is, in a case where the random access preamble is retransmitted).

After initiating the random access procedure, in a case where the PUCCH resource becomes effective before receiving the RAR, that is, in a case where the PUCCH resource used for SR transmission becomes valid in the clocking period of the random access response window (or the message B response window), the terminal apparatus 10 may select the PUCCH resource and perform SR transmission. Further, in a case where the PUCCH resource becomes valid before the contention resolution is received, the terminal apparatus 10 may select the PUCCH resource and perform SR transmission.

When a random access procedure is initiated to request an uplink resource for a high-priority service, the terminal apparatus 10 transmits a RACH message 3 including at least a C-RNTI (C-RNTI MAC CE). In a case where the RACH message 3 includes a C-RNTI (C-RNTI MAC CE), the base station apparatus 20 identifies (classifies, discriminates) the terminal apparatus 10 in the cell by using the C-RNTI, and determines that the identified terminal apparatus 10 has initiated a random access procedure for a scheduling request.

Note that, in a case of carrier aggregation (CA), that is, in a case where Cell DRX is configured for a plurality of serving cells, and all the cells are in an active period of Cell DRX, the terminal apparatus 10 determines whether a valid PUCCH resource in a serving cell in which a scheduling request can be transmitted is configured within a predetermined period.

The base station apparatus 20 may implicitly notify the terminal apparatus 10 that the initiation of the random access procedure is not permitted even when the PUCCH resource corresponding to the high-priority service is unavailable by not configuring the predetermined period (absent) or configuring the predetermined period to a value indicating 0 or infinity.

In addition, the terminal apparatus 1 may determine the initiation of the random access procedure on the basis of information indicating support of an emergency call (IMS emergency support: ims-EmergencySupport) reported in the system information of the serving cell. That is, when ims-EmergencySupport indicates true, it may be determined that the initiation of the random access procedure is permitted.

Note that Cell DTX and Cell DRX may be configured with the same parameters (active periods, cycles, and offsets). That is, in this case, Cell DRX can be read as Cell DTX/DRX.

As described above, according to the first embodiment, even in a cell to which Cell DTX/DRX is applied for power saving, the terminal apparatus 10 and the base station apparatus 20 can appropriately transmit a scheduling request with high priority on the basis of the active period/inactive period of Cell DRX, and thus, it is possible to efficiently transmit and

receive data while suppressing an increase in power consumption of the base station apparatus 20.

<Second Embodiment>

A second embodiment will be described. Note that description of configurations, functions, or procedures common to the first embodiment and the second embodiment will be omitted. That is, points different from the first embodiment will be mainly described below.

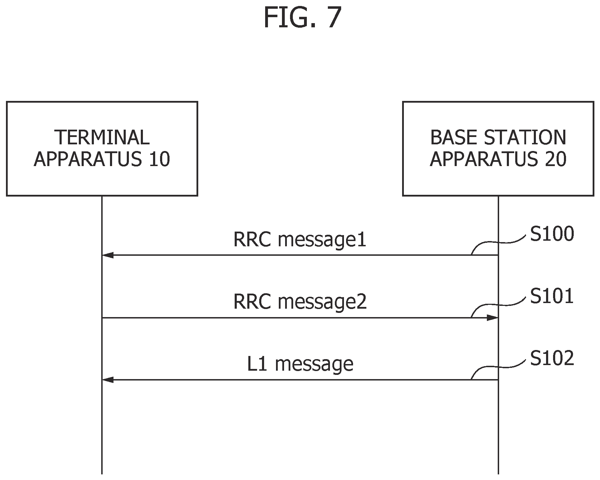

FIG. 7 is a sequence diagram illustrating an example of a configuration procedure related to Cell DTX/DRX configuration in the terminal apparatus 10 and the base station apparatus 20. Note that, although not illustrated, the processing starts from a state in which a radio connection (RRC setup) procedure between the terminal apparatus 10 and the base station apparatus 20 is completed and the state of the terminal apparatus 10 is shifted to an in-communication state (also referred to as a connected state or an RRC connected state). In addition, it is assumed that the terminal apparatus 10 generates an RRC message (UE Capability message) and transmits the RRC message to the base station apparatus 20 in order to notify the base station apparatus 20 of the radio capability of the terminal apparatus.

The base station apparatus 20 transmits the first RRC message (RRC message1 in the drawing) to the terminal apparatus 10 (step S100). As the first RRC message, for example, a dedicated RRC message such as an RRCReconfiguration message is used. The first RRC message includes at least a Cell DTX/DRX duration (Cell DTX/DRX on duration timer), an offset value of Cell DTX/DRX (Cell DTX/DRX offset), and a Cell DTX/DRX cycle (Cell DTX/DRX cycle) as the Cell DTX/DRX configuration of the cell. The terminal apparatus 10 that has received the Cell DTX/DRX configuration stores the configuration, activates the received configuration according to the indication of the base station apparatus 20, and applies the configuration in the transmission/reception processing.

In addition, an additional identifier for determining whether to activate the Cell DTX/DRX configuration at the same time as the Cell DTX/DRX configuration may be included. A plurality of Cell DTX/DRX configurations may be configured at the same time, or may be reported in a list form in which configurations can be added, deleted (released), and updated (Add, Release, Modify). In a case where the notification is provided in the list form, an index number for designating each list may be reported.

The base station apparatus 20 may generate only one of the Cell DTX configuration and the Cell DRX configuration and notify the terminal apparatus 10 of the generated Cell DTX configuration or Cell DRX configuration. The Cell DTX configuration and the Cell DRX configuration may be independently configured, or the Cell DTX configuration and the Cell DRX configuration may be linked and configured.

The terminal apparatus 10 transmits a second RRC message (RRC message2 in the drawing) to the base station apparatus 20 as a response to the first RRC message (step S101). The second RRC message is, for example, an RRCReconfigurationComplete message.

After configuring the Cell DTX/DRX configuration, the base station apparatus 20 may dynamically give an indication of activation and deactivation of the configuration according to the traffic amount, the number of connected terminal apparatuses 10, and the like. In this case, an L1 message (L1 message in the drawing) may be used as an indication signal (step S102). The base station apparatus 20 may give an indication by using a PDCCH (that is, a PDCCH scrambled with cellDTXDRX-RNTI) common to a plurality of terminal apparatuses 10.

In a case where a common PDCCH is used, some of downlink control information (DCI) bits in the PDCCH may be used to designate an index of a cell to be activated or deactivated for both or one of Cell DTX/DRX. The cellDTXDRX-RNTI may be common to all the terminal apparatuses 10 in the cell, or may be common to the terminal apparatuses 10 belonging to a predetermined group. The classification of the group may be reported in advance by using an RRC message. In addition, a group of the terminal apparatuses 10 may be designated by using some of the DCI bits. The base station apparatus 20 may transmit at least the cellDTXDRX-RNTI, the information of the search space (PDCCH transmission position) for receiving the common PDCCH, and the bit size of the DCI by using the first message.

Alternatively, the base station apparatus 20 may report information indicating a trigger of conditional handover by using another DCI bit in addition to the activation and deactivation of the configuration in the L1 message in step S102. The conditional handover configuration is configured in the terminal apparatus 10 by using an RRC message (for example, an RRCReconfiguration message) by the base station apparatus 20 before the L1 message is transmitted.

In this case, the conditional handover configuration includes at least a conditional handover configuration in which an NES mode is taken into consideration (hereinafter, referred to as NES mode CHO configuration), and evaluation of an event based on the NES mode CHO configuration is performed until the L1 message is received, but the condition event is not satisfied, and handover itself is not performed. The base station apparatus 20 designates the indication to enable the conditional handover condition event in any of the unit of the terminal apparatus 10, the unit of the terminal apparatus 10 belonging to a predetermined group, and the unit of the terminal apparatus 10 in the cell.

In a case where the Cell DRX configuration is released, the terminal apparatus 10 may delete the NES mode CHO configuration or stop the evaluation of the event based on the NES mode CHO configuration. The base station apparatus 20 may notify the terminal apparatus 10 of which bit in the DCI the indication to enable the conditional handover condition

event is transmitted by designating the bit in the bitmap format or the relative position of the bit with reference to the MSB (or LSB).

Here, a case where activation or deactivation of both or one of Cell DTX/DRX by the L1 message is indicated after SR transmission is performed is considered.

In the case of SR transmission based on random access, when at least Cell DRX is activated while waiting for reception of a RAR or while waiting for reception of contention resolution, and a valid PUCCH resource is in a Cell DRX active period, the terminal apparatus 10 performs SR transmission by using the PUCCH resource in a next SR transmission occasion. The terminal apparatus 10 may determine that the PUCCH resource is valid when any PUCCH resource is configured, or may determine that the PUCCH resource is valid when there is a PUCCH resource corresponding to a high-priority LCH.

In the case of SR transmission using the PUCCH, while waiting for a response to transmission of a pending SR (that is, while monitoring the uplink grant transmitted from the base station apparatus 20), at least Cell DRX is activated, and if a valid PUCCH resource is in a Cell DRX active period, the terminal apparatus 10 performs SR transmission by using the PUCCH resource in the next SR transmission occasion. The terminal apparatus 10 may determine that the PUCCH resource is valid when any PUCCH resource is configured, or may determine that the PUCCH resource is valid when there are one or more PUCCH resources corresponding to the high-priority LCH.

In the case of SR transmission using the PUCCH, while waiting for a response to transmission of a pending SR (that is, while monitoring the uplink grant transmitted from the base station apparatus 20), at least Cell DRX is deactivated, and a valid PUCCH resource is not in a Cell DRX active period, the terminal apparatus 10 performs SR transmission by using random access in the next SR transmission occasion.

As described above, according to the second embodiment, even in a cell to which Cell DTX/DRX is applied for power saving, the terminal apparatus 10 and the base station apparatus 20 can appropriately transmit a scheduling request with high priority in consideration of the dynamically changed active period/inactive period of Cell DRX, and thus, it is possible to efficiently transmit and receive data while suppressing an increase in power consumption of the base station apparatus 20.

The base station apparatus 20 may notify the terminal apparatus 10 of activation or inactivation of Cell DRX by using a dedicated RRC message.

Furthermore, according to the first and second embodiments, in a cell to which Cell DTX/DRX is applied as a network power reduction technology, the terminal apparatus 10 and the base station apparatus 20 can efficiently transmit and receive data while suppressing an increase in power consumption of the base station apparatus 20. That is, the terminal apparatus 10 and the base station apparatus 20 can improve the power saving efficiency related to the wireless communication between the terminal apparatus 10 and the base station apparatus 20 without affecting the high-priority service.

Note that each of the above-described embodiments is for facilitating understanding of the present invention, and is not intended to limit the present invention. The present invention can be modified and improved without departing from the gist thereof, and the present invention includes equivalents thereof.

<Hardware Configurations of Apparatuses in Each Embodiment>

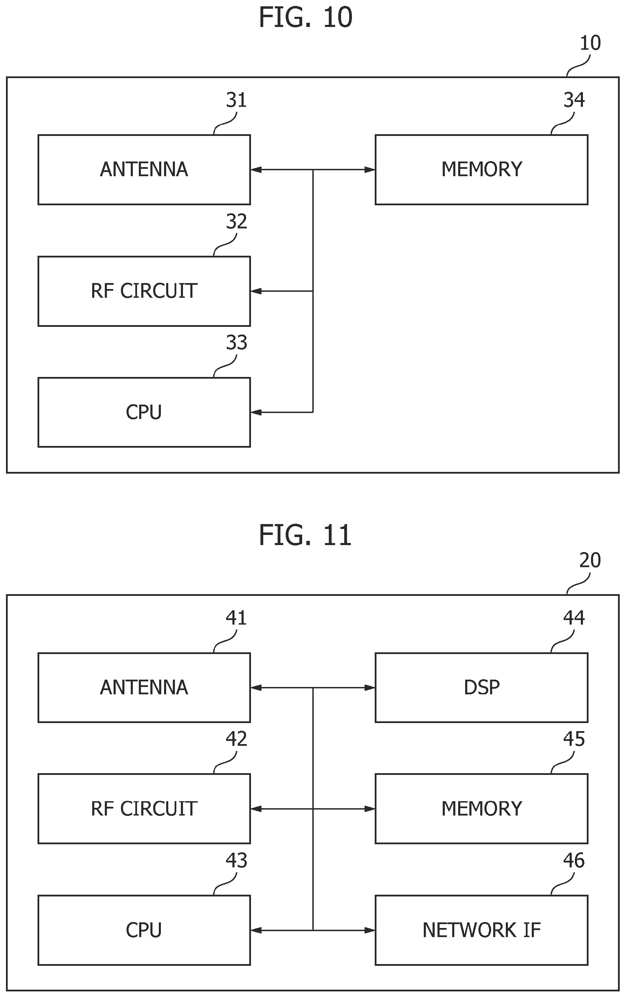

A hardware configuration of each apparatus in the wireless communication system of each embodiment will be described with reference to FIGS. 10 and 11.

FIG. 10 is a diagram illustrating an example of a hardware configuration of the terminal apparatus 10. As illustrated in FIG. 10, the terminal apparatus 10 has, for example, a radio frequency (RF) circuit 32 including an antenna 31, a central processing unit (CPU) 33, and a memory 34 as hardware constituents. The terminal apparatus 10 may have a display apparatus such as a liquid crystal display (LCD) connected to the CPU 33. The memory 34 includes, for example, at least one of a random access memory (RAM) such as a synchronous dynamic random access memory (SDRAM), a read only memory (ROM), and a flash memory, and stores a program, control information, and a data signal.

The correspondence between the functional configuration of the terminal apparatus 10 illustrated in FIG. 2 and the hardware configuration of the terminal apparatus 10 illustrated in FIG. 10 will be described. The transmission/reception antenna unit 19, the transmission unit 17, and the reception unit 15 are realized by, for example, the RF circuit 32, or the antenna 31 and the RF circuit 32. The control unit 13 and the processing unit 11 are realized by, for example, the CPU 33, the memory 34, and a digital electronic circuit (not illustrated). Examples of the digital electronic circuit include an application specific integrated circuit (ASIC), a field programmable gate array (FPGA), and a large scale integration (LSI).

FIG. 11 is a diagram illustrating an example of a hardware configuration of the base station apparatus 20. As illustrated in FIG. 11, the base station apparatus 20 includes, for example, an RF circuit 42 including an antenna 41, a CPU 43, a DSP 44, a memory 45, and a network interface (IF) 46 as hardware constituents. The CPU 43 is connected via a bus so that input and output of various signals and data signals are possible. The memory 45 includes, for example, at least one of a RAM such as a SDRAM, a ROM, and a flash memory, and stores programs, control information, and data signals.

The correspondence between the functional configuration of the base station apparatus 20 illustrated in FIG. 3 and the hardware configuration of the base station apparatus 20 illustrated in FIG. 11 will be described. The transmission/reception antenna unit 29, the transmission unit 27, and the reception unit 25 are realized by, for example, the RF circuit 42, or the antenna 41 and the RF circuit 42. The control unit 23 and the processing unit 21 are realized by, for example, the CPU 43, the DSP 44, the memory 45, and a digital electronic circuit (not illustrated). Examples of the digital electronic circuit include an ASIC, an FPGA, and an LSI.

REFERENCE SIGNS LIST

1 WIRELESS COMMUNICATION SYSTEM
10 TERMINAL APPARATUS
20 BASE STATION APPARATUS
30 CORE NETWORK
11, 21 PROCESSING UNIT
13, 23 CONTROL UNIT
15, 25 RECEPTION UNIT
17, 27 TRANSMISSION UNIT
19, 29 TRANSMISSION/RECEPTION ANTENNA UNIT
31, 41 ANTENNA
32, 42 RF CIRCUIT
33, 43 CPU
34, 45 MEMORY
44 DSP
46 NETWORK INTERFACE IF
111, 211 RADIO RESOURCE PROCESSING UNIT
113, 213 DISCONTINUOUS TRANSMISSION/RECEPTION PROCESSING UNIT

## Claims

1. A terminal apparatus that communicates with a base station apparatus, the terminal apparatus comprising:

   a receiver that receives configuration information of a first active period indicating a transmission/reception period in units of cells and a second active period indicating a transmission/reception period for each terminal apparatus from the base station apparatus;
   a processor that determines a method of controlling a scheduling request on the basis of a priority of a service that triggers the scheduling request, a timing at which the scheduling request is triggered, information regarding the first active period, information indicating a predetermined period counted from the timing at which the scheduling request is triggered, and a configuration state of a resource of a physical uplink control channel for transmitting the scheduling request in a case where the scheduling request for requesting an uplink resource is transmitted; and
   a transmitter that transmits the scheduling request on the basis of the determination.

2. The terminal apparatus according to claim 1, wherein, in a case where the trigger timing is within the first active period and a resource of the physical uplink control channel is unavailable, when a predetermined period elapses from the trigger timing, a random access procedure is started for transmitting the scheduling request in a case where the next first active period is not started.

3. The terminal apparatus according to claim 2, wherein, in a case where a remainder value obtained by dividing a value obtained by converting the trigger timing into a subframe by a first active period is smaller than a value of an offset time in units of subframes from a head of a frame indicating a start time of the first active period, the random access procedure is started for transmitting the scheduling request.

4. The terminal apparatus according to claim 2, wherein, in a case where the random access procedure is started, a period after an identifier of the terminal apparatus in a cell is included in the uplink resource received from the base station apparatus and transmitted is considered as the second active period.

**5.** The terminal apparatus according to claim 4, wherein, in a case where the random access procedure is started, an identifier of the terminal apparatus in a cell is included in the uplink resource received from the base station apparatus and transmitted, and monitoring of an identifier indicating activation or deactivation of the first active period is started in the second active period.

**6.** The terminal apparatus according to claim 1, wherein the determination of the method of controlling the scheduling request is performed at each of the timing at which the scheduling request is triggered and a timing at which an identifier indicating activation or deactivation of the first active period is received.

**7.** A base station apparatus that communicates with a terminal apparatus, the base station apparatus comprising:

a transmitter that transmits configuration information of a first active period indicating a transmission/reception period in units of cells and a second active period indicating a transmission/reception period for each terminal apparatus to the terminal apparatus;
a processor that configures, in the terminal apparatus, information regarding the first active period, information indicating a predetermined period counted from the trigger timing, and a resource of a physical uplink control channel for transmitting the scheduling request in order to determine a method of controlling a scheduling request for requesting an uplink resource corresponding to a high-priority service; and
a receiver that receives the scheduling request transmitted on the basis of a determination of the terminal apparatus.

**8.** The base station apparatus according to claim 7, wherein permission to start a random access procedure for transmitting the scheduling request in the first active period is indicated by configuring a predetermined period counted from the trigger timing in the terminal apparatus.

**9.** The base station apparatus according to claim 7, wherein, in a case where the terminal apparatus transmits the scheduling request for requesting the uplink resource corresponding to the high-priority service, a priority of a logical channel used to determine selection of the physical uplink control channel is configured.

**10.** The base station apparatus according to claim 8, wherein, in a case where the terminal apparatus starts the random access procedure, and an identifier of the terminal apparatus in a cell is received from an uplink resource included in a random access response, an identifier indicating activation or deactivation of the first active period is transmitted within the second active period.

**11.** A control method for a terminal apparatus, comprising:

a step of receiving configuration information of a first active period indicating a transmission/reception period in units of cells and a second active period indicating a transmission/reception period for each terminal apparatus from a base station apparatus;
a step of, in a case of transmitting a scheduling request for requesting an uplink resource, determining a method of controlling the scheduling request on the basis of a priority of a service for triggering the scheduling request, a timing at which the scheduling request is triggered, information regarding the first active period, information indicating a predetermined period counted from the timing at which the scheduling request is triggered, and a configuration state of a resource of a physical uplink control channel for transmitting the scheduling request; and
a step of transmitting the scheduling request on the basis of the determination.

**12.** A control method for a base station apparatus, comprising:

a step of transmitting configuration information of a first active period indicating a transmission/reception period in units of cells and a second active period indicating a transmission/reception period for each terminal apparatus to the terminal apparatus;
a step of configuring, in the terminal apparatus, information regarding the first active period, information indicating a predetermined period counted from a trigger timing, and a resource of a physical uplink control channel for transmitting the scheduling request in order to determine a method of controlling the scheduling request for requesting an uplink resource corresponding to a high-priority service; and
a step of receiving the scheduling request transmitted on the basis of a determination of the terminal apparatus.

FIG. 1

30
CORE NETWORK
1
20A
20B
10

FIG. 2
10
19
15
RECEPTION UNIT
11
PROCESSING UNIT
13
CONTROL UNIT
RADIO RESOURCE PROCESSING UNIT
111
DISCONTINUOUS TRANSMISSION/ RECEPTION PROCESSING UNIT
113
17
TRANSMISSION UNIT

FIG. 3
20
29
25
RECEPTION UNIT
21
PROCESSING UNIT
23
CONTROL UNIT
RADIO RESOURCE PROCESSING UNIT
211
DISCONTINUOUS TRANSMISSION/ RECEPTION PROCESSING UNIT
213
27
TRANSMISSION UNIT

FIG. 4
offset2
Next active period
offset2
Cell DRX active period
Cell DRX cycle
Duration1
T40
T41
T42
T43
T44
T45
T46
t

offset2
Cell DRX active period
T56
T55
Cell DRX cycle
T50
T53
T51
Duration1
T54
offset2
Next active period
T52
t

FIG. 5

offset2
Cell DRX active period
offset2
Next active period
SR prohibit timer
T64
T67
Cell DRX cycle
Duration1
T60
T63
T61
T65
T66 T62
t

FIG. 6

FIG. 7

TERMINAL
APPARATUS 10
BASE STATION
APPARATUS 20
RRC message1
S100
RRC message2
S101
L1 message
S102

offset
C-DRX
T00
T00
Inactivity timer
T02
Inactivity timer
T03
DRX cycle
offset
C-DRX
t

FIG. 8

t
Next active period
offset2
T15
T13
Duration1
T14
T12
T11
Cell DRX active period
Cell DRX cycle
offset2
T10

FIG. 9

FIG. 10

10
31
ANTENNA
34
MEMORY
32
RF CIRCUIT
33
CPU

FIG. 11

20
41
ANTENNA
44
DSP
42
RF CIRCUIT
45
MEMORY
43
CPU
46
NETWORK IF

# INTERNATIONAL SEARCH REPORT

International application No.
**PCT/JP2023/039487**

**A. CLASSIFICATION OF SUBJECT MATTER**

***H04W 72/1268***(2023.01)i; ***H04W 52/02***(2009.01)i
FI: H04W72/1268; H04W52/02 110

According to International Patent Classification (IPC) or to both national classification and IPC

**B. FIELDS SEARCHED**

Minimum documentation searched (classification system followed by classification symbols)

H04W72/1268; H04W52/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | XIAOMI. Discussions on cell DTX-DRX for network energy saving. 3GPP TSG RAN WG1 #114b R1-2309462. 28 September 2023, pp. 1-11<br>chapter 2.1 | 1-12 |
| A | III. Cell DTX/DRX NES Techniques. 3GPP TSG-RAN WG2 Meeting #123-bis R2-2310482. 17 October 2023, pp. 1-6<br>entire text | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *3GPP TR 38.864 V18.0.0*, December 2022